# EUROPÄISCHE PATENTSCHRIFT

(11) **EP 1 567 786 B1**
(45) Veröffentlichungstag und Bekanntmachung des Hinweises auf die Patenterteilung: **14.02.2007**
(21) Anmeldenummer: 03789063.9
(22) Anmeldetag: 20.11.2003
(51) Int. Cl.: F16H 1/22

(54) **VERFAHREN ZUR VERLUSTARMEN DREHMOMENTÜBERLEITUNG IN PLANETENGETRIEBEN**
METHOD FOR EFFECTING LOW-LOSS TORQUE TRANSMISSION IN PLANETARY GEARS
PROCEDE DE TRANSMISSION DE COUPLE A FAIBLES PERTES DANS LES BOITES A ENGRENAGES PLANETAIRES

(30) Priorität: 22.11.2002 DE 10254527
(43) Veröffentlichungstag der Anmeldung: 31.08.2005
(73) Patentinhaber: Arndt, Joachim, 83278 Traunstein (DE); Simon, Maximilian, 82140 Olching (DE)
(72) Erfinder: ARNDT, Joachim, 83278 Traunstein (DE); SIMON, Maximilian, 82140 Olching (DE); VOJACEK, Herbert, 83703 Gmund a. Tegernsee (DE)
(74) Vertreter: Lohnert, Wolfgang
(86) Internationale Anmeldenummer: PCT/EP2003/013011
(87) Internationale Veröffentlichungsnummer: WO 2004/048805

(56) Entgegenhaltungen:
- DE-A- 2 029 371
- DE-A- 4 017 226
- DE-B- 1 149 958
- GB-A- 662 905

## Beschreibung

Die Erfindung betrifft ein Verfahren und eine Vorrichtung zur verlust- und geräuscharmen Übertragung eines mit niedriger Drehzahl über eine Einleitwelle in ein Getriebe eingeleiteten Drehmoments auf eine Abtriebswelle vergleichsweise hoher Drehzahl in einem einstufigen, mehrere Planeteneinheiten aufweisenden Planetengetriebe, wie aus der gattungsbildende GB 662 905 bekannt.

Mechanische Getriebe dienen dazu, ein über eine Antriebswelle eingeleitetes Drehmoment in Erfüllung verschiedener Randbedingungen möglichst verlustfrei, betriebssicher und kosteneffizient auf eine Abtriebswelle zu überführen.
Vorgegebene Randbedingungen betreffen die Baumaße, bzw das verfügbare Raumangebot, die Größe des zu übertragenden Momentes, die vorgegebenen Wellendrehzahlen bei der Ein- und Ableitung, aber auch den Grad der Geräuscharmut, der Betriebssicherheit, gleichmäßiger Auslastung sowie die Forderung nach konstruktiver Auslegung für eine einfache Montage und Wartung des Getriebes.

Leistungsverluste in langsam laufenden Getrieben sind überwiegend Reibungsverluste, verursacht durch axiale und/oder radiale Kräfte zwischen kämmenden Zahnrädern und an Wellenlagern.
Es ist daher der Bedeutung entsprechend eine Vielzahl von Vorschlägen zur Minimierung von Drehmomentverlusten in Getrieben bekannt, wobei die oben angesprochenen, zu berücksichtigenden Randbedingungen zu Kompromissen zwingen.

Getriebezahnräder sind gerad- oder schrägverzahnt ausgeführt. Zur Kompensation von Axialkräften und zur Minimierung von Leistungsverlusten in Lagern werden Schrägverzahnungen als Doppel- oder Pfeilverzahnungen ausgeführt, d.h. ein Zahnrad, bzw. eine Zahnradeinheit weist zwei aneinandergrenzende, angeschrägte Zahnhälften oder zwei, eine Einheit bildende, im Zahnbereich entsprechend angeschrägte Halbräder auf.

Eine eigene Gruppe von Getrieben umfasst die Stufenplaneten. Darunter versteht man Getriebe mit ein- oder zwecks Drehmoment-, bzw. Lastaufteilung vorzugsweise mehreren Planeteneinheiten, die sich um ihre eigene Planetenwelle drehen und die gegebenenfalls zusätzlich die Welle einer zur Planeteneinheit zentralen Getriebekomponente mit einem Sonnenritzel umkreisen (Standgetriebe / Umlaufgetriebe). Die Planeteneinheit wirkt im Getriebe stets mit einer momenteinleitenden und einer momentabtreibenden Getriebekomponente zusammen, beispielsweise mit einem Hohlrad und einem Sonnenritzel. Auf der Welle einer Planeteneinheit sind, voneinander beabstandet und zueinander drehfest angeordnet, zwei Zahnräder, bzw. Zahnradeinheiten unterschiedlicher Zähnezahl. Stufenplanetengetriebe ermöglichen eine höhere Übersetzung in einer Getriebestufe als Planetengetriebe mit Einfachplaneten. Sie weisen auch weniger Teile auf als echte zweistufige Planetengetriebe und werden deshalb eingesetzt. Für eine kompakte Bauweise werden die Planetengetriebe üblicherweise mit Leistungsverzweigung ausgeführt.

Bei hohen Ansprüchen an die Laufruhe von Stufenplanetengetrieben werden die Zähne der Zahnräder vielfach schrägverzahnt ausgeführt. Einfache Schrägverzahnungen führen bei der Drehmomentübertragung zu unerwünschten Axialkräften zwischen den kämmenden Zahnrädern. Als Gegenmaßnahme ist es bekannt, durch die Wahl der Schrägungsrichtung und der Größe des Schrägungswinkels von zwei, auf einer Planetenwelle für die Lasteinleitung und den Lastabtrieb sitzenden Planetenzahnräder die auftretenden Axialkräfte zu kompensieren und damit die resultierende Axialkraft einer Planeteneinheit möglichst klein zu halten. In einer Planeteneinheit nicht kompensierte Axialkräfte und Kippmomente müssen in den Wellenlagern der Planeteneinheit aufgenommen werden.
Beim Zusammenwirken von schrägverzahnten Planeteneinheiten mit einer An- oder Abtriebskomponente des Getriebes werden stets erhebliche Axialkräfte auf diese übertragen, besonders auch in den praxisnahen Fällen, wo zur Leistungsverzweigung zwei und mehr Planeteneinheiten eingesetzt werden. Hohe Axialkräfte erfordern, vor allem bei der Lagerung schnell drehender Getriebekomponenten, z. B. der Abtriebskomponente mit Sonnenritzel, das zudem meist noch radial frei einstellbar gestaltet ist, erheblichen baulichen Aufwand hinsichtlich Lagergröße und Lagerausführung zur Aufnahme der Axialkräfte. Unerwünschte Leistungsverlusten in den Lagern sind die Folge.

In den einzelnen Planeteneinheiten innerhalb eines Stufenplanetensatzes bedarf es zur gleichmäßigen Lastaufteilung auf die einzelnen Planeteneinheiten bei gleichzeitiger Kompensation von Axialkräften einer sehr genauen Abstimmung der Winkelstellungen (Zahnschräge, Winkelposition auf Planetenwelle) der einzelnen Zahnräder. Das erfordert erheblichen Aufwand bei der Fertigung und/oder bei der Montage. Zudem haben, beispielsweise durch ungleichmäßige Wärmeausdehnung hervorgerufen, axiale Abstandsänderungen zwischen zwei, auf verschiedenen Wellen in einem Getriebe kämmenden Zahnräder mit einfacher Schrägverzahnung erheblichen Einfluss auf die Lastaufteilung auf die einzelnen, um eine Zentraleinheit angeordnete Planeteneinheiten.

Die beiden, voneinander beabstandeten Zahnräder oder Doppelzahnräder einer Planeteneinheit werden bis heute entweder einheitlich geradverzahnt oder einheitlich schrägverzahnt, bzw. doppelt schrägverzahnt. Nur für diese Ausführungsvarianten liegen ausreichende Erfahrungen zu den Getriebeeigenschaften vor, auf die der Fachmann zurückgreifen kann.

In Anwendung dieser, dem Fachmann geläufigen Grundkenntnisse zur Auslegung eines Planetengetriebes und dessen Auswirkung auf Axialkräfte, Leistungsverluste und Lastverzweigung konzentrierten sich in der Vergangenheit die Bemühungen darauf, entweder die unvermeidlichen Kräfte in möglichst verlustarmen Wellenlagern aufzufangen und/oder dafür möglichst platzsparende, die Getriebeabmessungen wenig belastende Konstruktionen vorzuschlagen, oder aber Maßnahmen zu setzen, um Axialkräfte möglichst von den Wellenlagern fern zu halten, d.h. zu kompensieren und damit technisch aufwändige und gleichwohl meist reparaturanfällige Lager überflüssig zu machen.

Ein Beispiel für erstere Bemühungen ist die DE 199 17 605 A1. Sie betrifft ein auf eine Antriebswelle aufsteckbares Getriebe mit mehrstufiger Planetenanordnung. Der Kraft-, bzw. Momenteintrieb erfolgt über ein innenverzahntes Hohlrad auf eine erste Planetenstufe mit gehäusefester Welle. Entsprechend dieser technischen Vorgaben betrifft die dortige erfinderische Lehre eine platzsparende Lagergestaltung für die Einleitwelle, einschließlich dem auf dieser kraft- u/o formschlüssig aufgebrachten Hohlrad.

Aus der Vielzahl vorbekannter Druckschriften mit Maßnahmen zur Kraftkompensation und / oder Lastaufteilung in Planetengetrieben werden die folgenden stellvertretend skizziert.

Zur Begrenzung der nicht kompensierten Axialkräfte auf der An- und die Abtriebswelle eines Getriebes und um die Lagerung der einzelnen Planeteneinheiten eines Stufenplaneten möglichst axialkraftfrei zu halten, wird in der Patentschrift DE 4017226 A1 die Ausgestaltung eines Getriebes mit mindestens drei, gleichmäßig über den Umfang verteilten Planeteneinheiten vorgeschlagen, wobei die durchgängig als Doppelverzweigungsräder ausgestalteten Zahnräder einer Planeteneinheit über eine axialelastische Kupplung miteinander verbunden sind. Diese bereits technisch aufwändige Ausgestaltung erfordert zusätzlich eine axialelastische Anschlusskupplung für die An- und/oder die Abtriebswelle, da sich, je nach der unvermeidlich variablen Stellung der Zahnräder zueinander, der Abstand zwischen beiden Wellen variiert und das Getriebe andernfalls nach außen hin nicht axialkraftfrei ist. Der enorme Aufwand zweier Doppelschrägverzahnungen in Kombination mit der großen Anzahl elastischer Kupplungen ist allenfalls bei leistungsverzweigten Standgetrieben ohne Hohlrad und/oder bei hohen Umfangsgeschwindigkeiten wirtschaftlich vertretbar.

Die DE 39 23 430 C2 beschreibt ein doppelt schrägverzahntes Stirnrad mit Pfeilverzahnung für ein Planetengetriebe mit einer einzelnen Planeteneinheit, das zur einfacheren Fertigung als zwei Einzel-, bzw. Halbräder mit gegenläufigem, aber gleichem Schrägungswinkel ausgeführt ist. Die beiden Halbräder werden in einem eigenen Arbeitsgang drehfest und profilkonform miteinander verbunden. Dies geschieht mit Hilfe einer Pressölverbindung am Verbindungspresssitz der beiden Halbräder, die sich auf diese Weise durch Verdrehen auf eine gemeinsame Mittelebene justieren lassen. Das Resultat ist eine Symmetrieeinstellung zweier Zahnradhälften mit hohem technisch konstruktiven Aufwand. Die Aufgabe einer gleichmäßigen Lastverteilung auf verschiedene Planeteneinheiten stellt sich mangels mehrerer Planeteneinheiten nicht.

Die DE 199 61 695 A1 betrifft ein Planetengetriebe, wie vorstehend ohne Lastverteilung auf mehrere Planeteneinheiten, mit einem doppelschrägverzahnten, fest gelagerten Festrad, das mit einem entsprechend verzahnten Losrad kämmt, wobei die Zähne jeder der beiden Teilbereiche der Doppelschrägverzahnung derart unterschiedliche Schrägungswinkel aufweisen, dass die beim Kämmen dieser Doppelzahnräder gezielt aufgebauten, resultierenden axialen Kraftkomponenten derjenigen, in entgegengesetzter Richtung wirkenden entspricht, die über das Losrad der Abtriebswelle in das Getriebe eingebracht wird - beispielsweise im Fall einer nur einfachen Schrägverzahnung des auf derselben Welle mit dem Losrad zusammen drehenden zweiten Zahnrad. In der Praxis kann dieser Ausgleich jedoch nur dafür sorgen, dass die Losradwelle nach außenaxialkraftfrei ist, beide Doppelschrägverzahnungen zueinander zentriert und gleich beansprucht sind. Die für eine Kräftekompensation zusätzliche Erschwernis einer gleichmäßigen Lastaufteilung auf mehrere Planeteneinheiten besteht nicht.

Der Erfindung liegt damit die Aufgabe zugrunde, ein Verfahren und ein dafür geeignetes Stufenplanetengetriebe vorzuschlagen, das eine verlust- und geräuscharme Überleitung eines mit niedriger Wellendrehzahl eingeleiteten Drehmomentes auf eine vorzugsweise koaxial ausgerichtete Abtriebswelle mit zur Einleitwelle vergleichsweise hoher Drehzahl erlaubt und das die Nachteile der oben beschriebenen Verfahren und Getriebeausgestaltungen nicht aufweist oder weitestgehend verhindert. Aufgabe ist daher ein wirtschaftliches Verfahren und sind kostengünstige konstruktive Vorrichtungen zur möglichst vollständigen Kompensierung von Axialkräften in einem last-, bzw. leistungsverzweigten Getriebe mit gleichmäßiger Lastaufteilung auf die einzelnen Planeteneinheiten zu finden.

Gelöst wird diese eingangs genannte Aufgabe erfindungsgemäß mittels eines Verfahrens gemäß der kennzeichnenden Merkmale von Anspruch 1. Ein dazu geeignetes Getriebe weist die Merkmale von Anspruch 11 auf.

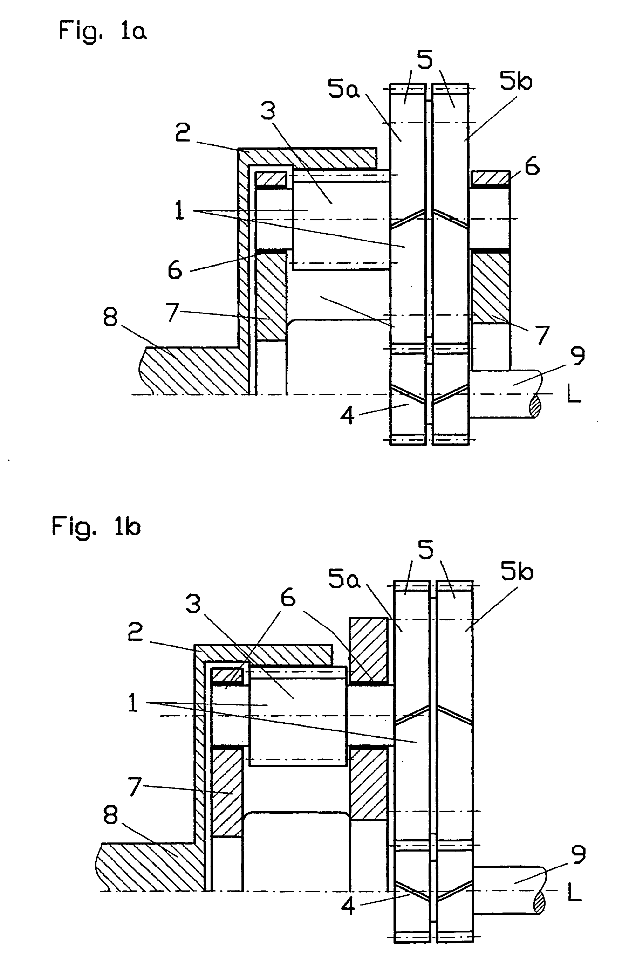

Einzelne bevorzugte Ausgestaltungen des Verfahrens sind in den Unteransprüchen beschrieben.
Bevorzugte Ausgestaltungen von Planetengetrieben zur Durchführung des Verfahrens sind in den Figuren 1a und 1b wiedergegeben.
Fig. 1a stellt einen Teilbereich des erfindungsgemäßen Getriebes als Schnitt durch den Wellenmittelpunkt der koaxialen An- und Abtriebswelle dar. Die Anordnung der Zahnräder einer Planeteneinheit erfolgt in dieser Ausführung zwischen den beiden Wellenlagern im Planetenträger.
Fig. 1b zeigt ein erfindungsgemäßes Getriebe in zu Fig. 1a identischer Darstellung, jedoch mit der Anordnung eines der beiden Zahnräder, bzw. Doppelzahnräder außerhalb der beiden Wellenlager, d. h. mit fliegender Anordnung des Doppelzahnrads bezogen auf die örtliche Lage der Lager auf der Planetenwelle.

Figur 1a zeigt ein um die Achse (L) achssymmetrisch aufgebautes Planetengetriebe mit koaxialer Einleit- (8) und Abtriebswelle (9) in einer solchen Schnittebene, dass eine von mehreren um das Sonnenritzel 4) der Abtriebswelle (9) angeordneten Planeteneinheiten (1) dargestellt wird. Die Planeteneinheit (1) ist mittels zweier Lager (6) in Radialrichtung fix, in Axialrichtung beweglich in einem Planetenträger (7) gelagert und besitzt ein aus zwei Halbrädern (5a) (5b) aufgebautes Doppelzahnrad (5), sowie ein geradverzahntes Zahnrad (3). Die gegenläufige Schrägverzahnung in den Halbrädern (5a) und (5b) ist angedeutet. Die Halbräder sind zueinander beabstandet ausgeführt. Es wurde gänzlich darauf verzichtet, eine der vielen, dem Fachmann geläufigen Vorrichtungen zu zeigen, mittels derer in jeder Planeteneinheit das zweite gegenüber dem ersten Halbrad in Achsrichtung u/o durch Verdrehen um die Achse gegeneinander justierbar und anschließend arretierbar ist. Einzelne Ausführungsvarianten für derartige Vorrichtungen sind weiter unten beschrieben. Das Sonnenritzel (4) mit zum Doppelzahnrad (5) korrespondierender Schrägverzahnung ist auf der Abtriebswelle (9) als form- u/o stoffschlüssige Zahnradeinheit ausgestaltet.

Das Hohlrad (2) ist als mit der Antriebswelle (8) als form- u/o stoffschlüssige Einheit ausgebildet.

In Figur 1 b ist als einziger Unterschied zu Fig.1a die Planetenwelle einer Planeteneinheit mit fliegender Anordnung des Doppelzahnrads (5) im Planetenträger (7) gelagert, und zwar bei freier axialer Beweglichkeit zwischen Planetenwelle und Lager (6).

Bisher war es für den Fachmann das nicht in Frage gestellte Mittel der Wahl bei Planetengetrieben, bei welchen die Momenteneinleitung in eine Planeteneinheit über ein Hohlrad erfolgt, die dabei kämmenden Zahnräder aus Gründen der Geräusch- und Schwingungsreduzierung mit Schrägverzahnungen auszuführen. Überraschenderweise lassen sich diese mit dem Hohlrad kämmenden Planetenzahnräder gemäß Erfindung ohne Nachteile für die Geräusch- und Schwingungseigenschaften mit Geradverzahnung ausgestalten. Eine Erklärung dafür dürfte die Kombination von sowohl niedriger Drehzahl der Einleitwelle als auch hohem Profilüberdeckungsgrad beim Zahneingriff eines Hohlrades mit den Planetenzahnrädern aller Planeteneinheiten gemäß Erfindung sein. Für diese günstigen Geräuscheigenschaften förderlich oder gar unverzichtbar ist die gleichzeitige efindungswesentliche Ausgestaltung einer Doppelschrägverzahnung und weiters die erfindungsgemäße Justierbarkeit der Halbräder des Doppelzahnrads aller Planeteneinheiten, welche mit dem Sonnenritzel kämmen. Der sich einstellende Vorteil ist besonders bemerkenswert, weil beim Sonnenritzel ein für die Geräuscherzeugung ungünstiger Zustand niedrigen Profilüberdeckungsgrades vorliegt.

Bei der Auslegung des Sonnenritzels ist dessen Ausgestaltung mit Schräg-, bzw.
Doppelschrägverzahnung zwingend geboten. Zum einen liegt beim Sonnenritzel die Zahnumfangsgeschwindigkeit gegenüber der beim Zahneingriff von Hohlrad mit dem Planetenzahnrad deutlich höher und zwar um das Verhältnis der Wälzkreise der beiden gleichdrehenden Zahnräder einer Planeteneinheit , zum anderen ist die Profilüberdeckung hier klein im Vergleich zur Situation beim Zahneingriff Hohlrad/Stufenplanet, da es sich beim Sonnenritzel um ein Außenzahnrad mit regelmäßig großer Zähnezahldifferenz zum kämmenden Zahnrad der Planeteneinheit handelt. Allein bezüglich der Geräuschentwicklung ist die Doppelschrägverzahnung der Einfachschrägverzahnung vergleichbarer Baubreite gleichwertig.

Die axiale Positionierung von Planeteneinheiten (1) und Sonnenritzel (4) zueinander wird entweder durch eine ortsfeste Lagerung des Sonnenritzels (4) bestimmt, oder aber durch die ortsfeste Lagerung nur einer von mehreren Planeteneinheiten (1), dies in Verbindung mit der Justierung der Halbräder der übrigen Planeteneinheiten.

Die Ausrichtung, bzw. Justierung der beiden Halbräder (5a, 5b) des Doppelzahnrads erfolgt in Form einer relativen Verdrehung und/oder mittels Axialverschiebung der Halbräder zueinander.
Nach einer bevorzugten Ausgestaltung der Erfindung sind die beiden Halbräder reibschlüssig verschraubt. Die Schraubenschäfte weisen Spiel in den Durchgangsbohrungen auf. Die Justierung der Zahnteilungsstellung der beiden Halbräder erfolgt durch deren relative Verdrehung innerhalb des Spiels der Schraubenschäfte in den Durchgangsbohrungen.
Jede axiale Abstandsänderung der Halbräder zueinander bedeutet gleichzeitig eine relative Verdrehung der Zahnpositionen zueinander. Eine Justierung mittels Axialverschiebung der Halbräder (5a, 5b) zueinander erfolgt nach einer weiteren bevorzugten Ausgestaltung der Erfindung über das Einlegen von Abstimmblechen zwischen den Halbrädern auf der Planetenwelle zur Erzielung einer gleichmäßigen Anlage der Zahnflanken beider Halbräder.
Die Möglichkeit des Justierens mittels entsprechender Elemente und Vorrichtungen ergibt einen weiteren Vorteil. Sie erlaubt eine weniger exakte und damit preisgünstigere Fertigung der einzelnen Getriebe-Zahnräder und Komponenten. Dies um so mehr, wenn beide oben beschriebenen Justierverfahren kombiniert werden.

Die Justierung der beiden Halbräder (5a, 5b) des Doppelzahnrads einer Planeteneinheit zueinander muss im Bereich der Teilungsgenauigkeit der Zahnräder selbst liegen, um bei mehreren Planeteneinheiten (1) eine gleichmäßige Lastvereilung auf die einzelnen Einheiten zu erzielen.
Die Justierung erfolgt bei der Montage und zwar je nach den vorliegenden Gegebenheiten an der bereits eingebauten Planeteneinheit oder außerhalb des Getriebes auf einer dafür bereitstehenden, dem Planetenträger nachgebildeten Justiereinrichtung. Letzteres bedeutet allerdings die Überprüfung des gleichmäßigen Zahntragens in Getriebe. Die mit der Justierung regelmäßig einhergehende Änderung der axialen Lage einer Planeteneinheit (1) gegenüber dem Hohlrad (2) - im Falle des axial festgehaltenen Sonnenritzels (4) - stört indes nicht, da die Geradverzahnung des Planetenzahnrads (3), das im Eingriff mit dem Hohlrad (2) steht, bei einer Axial-, bzw. Längsverschiebung dieser beiden Zahnradeinheiten auf einer Welle relativ zueinander, anders als im Falle einer Schrägverzahnung keine Drehwinkeländerung zueinander hervorruft. Bei einmal auf optimale Kraftaufteilung hin justierten Verzahnungsstellungen der einzelnen Planeteneinheiten, führt eine Längenänderung der Welle zwischen den Zahnräder einer einzelnen, aber auch zwischen denen verschiedener Planeteneinheiten, zu keiner Änderung der Lastaufteilung auf die einzelnen Zahnkontakte. Auch muss bei Ausgestaltung der Erfindungsmerkmale die Stellung der Zahnteilung des ersten Halbrads (5a) des Doppelzahnrads (5) zu derjenigen des Zahnrads (3) mit Geradverzahnung nur soweit zugeordnet werden, dass es beim Betrieb zu keinem axialen Anlaufen von Zahnrädern kommt und dass alle Zahnräder über ihre ganze Breite tragen. Um dies zu gewährleisten, wird entsprechend bekannter Getriebeausgestaltungen eines der jeweils kämmenden Zahnräder breiter ausgeführt als das andere und es werden die Halbräder des Doppelzahnrads nicht unmittelbar aneinander gelegt, sondern sie besitzen einen axialen Spalt zwischeneinander.

Bei der fliegenden Anordnung der Doppelschrägverzahnung nach Figur 1 b ist eine Montage einschließlich der Justierung der Doppelschrägverzahnung immer vergleichsweise einfach möglich. Eine Anordnung mit der Lagerung einer Planetenwelle beiderseits außerhalb der Zahnräder entsprechend Figur 1a kann , unter anderem bei kleinem Durchmesser des Doppelzahnrads, die Montage und anschließende Justierung im Getriebe deutlich erschweren. Deshalb kann das erfindungsgemäße Getriebe nach einer weiteren bevorzugten Ausführung einen solcherart geteilten Planetenträger (7) besitzen, dass die außerhalb des Getriebes bereits vorjustierten Planeteneinheiten für eine probeweise Lagerung und Überprüfung der Zahnstellung gegenüber den bereits eingebauten und justierten Planeteneinheiten, sowie für eine nochmalige Herausnahme und Nachjustierung, jeweils radial zur Planetenwelle in die Lager (6) im Planetenträger (7) eingelegt werden können.

Bei einer bevorzugten Ausgestaltung zur Durchführung des erfinderischen Verfahrens wird die Planetenwelle in ihrem Profil entsprechend dem geradverzahnten Planetenzahnrad gestaltet. Diese Profilform wird über die Breite des Zahneingriffs mit dem Hohlrad hinaus und dort mit gekürzten Zahnköpfen fortgeführt und es werden auf die so gezahnte Planetenwelle die Halbräder des Doppelzahnrads mit geometrisch entsprechendem Innenprofil aufgesteckt, justiert und arretiert.
Die Justierung der Halbräder erfolgt in diesem Fall nur durch Veränderung und Abstimmung des axialen Abstandes der beiden Halbrädern des Doppelzahnrads zueinander.

Das erfindungsgemäße Verfahren lässt sich insbesondere bei Planetengetrieben für Windkraftanlagen verwenden, ist aber nicht auf diese Anwendung beschränkt.

## Patentansprüche

1. Verfahren zur verlust- und geräuscharmen Überleitung eines mit niedriger Wellendrehzahl in ein Getriebe eingeleiteten Drehmomentes auf eine Abtriebswelle vergleichsweise hoher Drehzahl in einem einstufigen Planetengetriebe mit mehreren Planeteneinheiten, wobei
das eingeleitete Drehmoment über ein innen geradverzahntes Hohlrad auf 2 - 6, im Planetenträger zueinander radial fix gelagerte Planeteneinheiten und von dort auf ein gegenläufig schrägverzahntes Sonnenritzel einer Abtriebswelle übertragen wird,
**dadurch gekennzeichnet,**
**dass** zunächst das mit dem Hohlrad kämmende, geradverzahnte Planetenzahnrad und eines der beiden gegenläufig schrägverzahnten Halbrädern eines mit dem Sonnenritzel kämmenden Doppelzahnrads einer jeden Planeteneinheit auf der Planetenwelle ortsfest miteinander verbunden werden und dass mit der Montage der einzelnen Planeteneinheiten in die Lager des Planetenträgers das jeweils zweite gegenüber dem ersten Halbrad mittels Vorrichtungen zur Axial- u/o Drehverschiebung in eine Lage vorbestimmter Zahntragung und Lastaufteilung zwischen den einzelnen Planeteneinheiten gebracht und in dieser Lage arretiert wird.

2. Verfahren zur Drehmomentüberleitung nach Anspruch 1, **dadurch gekennzeichnet, dass** die Axial- u/o Drehverschiebung des zweiten Halbrads nacheinander an jedem der einzelnen Planeteneinheiten durchgeführt wird.

3. Verfahren zur Drehmomentüberleitung nach Anspruch 1 oder 2, **dadurch gekennzeichnet, dass** die Lagezuordnung des ersten zum zweiten Halbrad des Doppelzahnrads über eine Verdrehung gegeneinander erfolgt.

4. Verfahren zur Drehmomentüberleitung nach Anspruch 1 oder 2, **dadurch gekennzeichnet, dass** die Lagezuordnung des ersten zum zweiten Halbrad des Doppelzahnrads über eine axiale Relativverschiebung erfolgt.

5. Verfahren zur Drehmomentüberleitung nach Anspruch 1 bis 4, **dadurch gekennzeichnet, dass** das zweite Halbrad nach der Lagezuordnung kraft- u/o formschlüssig mit der Planetenwelle u/o dem ersten Halbrad verbunden und dort arretiert wird.

6. Verfahren zur Drehmomentübertragung nach Anspruch 1, 2 und 4, **dadurch gekennzeichnet, dass** das zweite gegenüber dem ersten Halbrad axial federnd arretiert wird.

7. Verfahren zur Drehmomentüberleitung nach Anspruch 6, **dadurch gekennzeichnet, dass** als Federelement Tellerfedern verwendet werden.

8. Verfahren zur Drehmomentüberleitung nach Anspruch1 und 4 bis 7, **dadurch gekennzeichnet, dass** das Verzahnungsprofil des geradverzahnten Planetenzahnrads kopfgekürzt als Wellenprofil zur axialen Führung eines oder beider Halbräder mit entsprechendem Innenprofil auf der Welle verwendet wird.

9. Verfahren zur Drehmomentüberleitung nach Anspruch 1,2,4 und 5, **dadurch gekennzeichnet, dass** das zweite gegenüber dem ersten Halbrad durch Einlegen von Abstimmblechen zwischen den Halbrädern in Axialrichtung justiert wird.

10. Verfahren zur Drehmomentüberleitung nach Anspruch 1 bis 9, **dadurch gekennzeichnet, dass** in einen geteilten Planetenträger die Planeteneinheiten radial zur Achsrichtung der Planetenwelle in ihre Lagerstellen eingelegt werden.

11. Einstufiges Planetengetriebe mit 2 -6 auf einem Planetenträger (7) radial fix zueinander gelagerten Planeteneinheiten (1) zur verlust- und geräuscharmen Überleitung eines mit niedriger Drehzahl auf eine Antriebswelle (8) eingeleiteten Drehmoments auf das Sonnenritzel (4) einer Abtriebswelle (9) vergleichsweise hoher Drehzahl, wobei
jede Planeteneinheit (1) ein geradverzahntes Planetenzahnrad (3) aufweist, das mit einem, mit der Einleitwelle (8) fest verbundenen Hohlrad (2) mit innenliegender Geradverzahnung kämmt, **dadurch gekennzeichnet,**
**dass** das geradverzahnte Planetenzahnrad (3) mit zwei Halbrädern (5a, 5b) eines gegenläufig schrägverzahnten Doppelzahnrads (5) fest verbunden ist
und **dass** jede Planeteneinheit (1) Vorrichtungen besitzt, mittels derer bei der Montage der einzelnen Planeteneinheiten (1) im Planetenträger (7) das jeweils zweite gegenüber dem ersten Halbrad (5a,5b) zwecks gleichmäßiger Lastverteilung auf alle Planeteneinheiten in Achsrichtung u/o durch Verdrehen um die Planetenwelle ausrichtbar und arretierbar ist.

## Claims

1. Procedure for a low-noise and low-loss transmission of a torque from an input shaft with a relatively low speed into a gear train and onto an output shaft with a relatively high speed. To be used in a single-stage planetary gear train with several planets, the incoming torque being transmitted onto 2 to 6 planetary units locked in position in a carrier via a ring gear with internal spur toothing and then onto the double helical sun gear on an output shaft, **characterised by** the tact that first the planetary spur wheel meshing with the ring gear and one of the two half-wheels of a double helical twin wheel meshing with the sun wheel of any planetary gear unit are linked and locked on the planet shaft
and by the tact that during the mounting of the individual planetary units into the bearings of the carrier, the second half wheel is adjusted to the first half wheel by using devices for axial or rotational shifting in order to achieve an equal distribution of loads and is locked in position.

2. Procedure for the transmission of a torque according to claim 1, **characterised by** the fact that the axial and/or rotational movement for adjusting the second wheel is carried out on one of the individual planetary units after the other.

3. Procedure for the transmission of a torque according to claims 1 or 2, **characterised by** the fact that the adjustment of the relative position of the first to the second half-wheel is achieved by turning the halves one against the other.

4. Procedure for the transmission of a torque according to claims 1 or 2, **characterised by** the fact that the adjustment of the first to the second half of a twin wheel is by axial shifting.

5. Procedure for the transmission of a torque according to claims 1 through 4, **characterised by** the fact that after adjustment, the second half-wheel is friction-fit and/or form-fit to the planet shaft and/or the first half-wheel and then locked in position.

6. Procedure for the transmission of a torque according to claims 1, 2 and 4 **characterised by** the fact that the second half-wheel is axially elastic in relation to the first half-wheel.

7. Procedure for the transmission of a torque according to claim 6, **characterised by** the use of spring washers as elastic element.

8. Procedure for the transmission of a torque according to claims 1 and 4 through 7, **characterised by** the fact that the tooth profile of the planetary spur wheel is continued, with a reduced addendum, on the shaft to serve as a spline for one or both halves of the twin wheel with a corresponding internal toothing.

9. Procedure for the transmission of a torque according to claims 1, 2, 4 and 5, **characterised by** the fact that the axial adjustment of the second half of the twin wheel to the first half is by the insertion of shims between the two halves.

10. Procedure for the transmission of a torque according to claims 1 through 9, **characterised by** the use of a split carrier which allows for a radial insertion - referred to the axis of the planet shaft - of the planetary units into the bearings.

11. Single-stage planetary gear train with 2 to 6 planetary units (1) with a fixed radial position on a carrier (7) for a low-loss and low-noise transmission of a torque from an input shaft with a relatively low speed onto an output shaft with a relatively high speed, where each of the planetary units (1) is provided with a spur wheel (3) meshing with a ring gear (2) with internal spur toothing which is locked on the input shaft (8), **characterised by** the fact that the planetary spur wheel is locked to the two half-wheels (5a, 5b) of a double helical gear (5) and by the fact that, with view to an equal distribution of load on all of the planetary units, any of the planetary units (1) is provided with devices for adjusting the second half-wheel to the first half-wheel (5a, 5b) during the assembly of the individual planetary units (1) in the carrier (7) - either by adjusting their relative axial positions or/and by turning them on the planet shaft - and fixing them in position

## Revendications

1. Procédé réduisant à un minimum les pertes et le bruit dans la transmission d'un couple emmené dans un train planétaire à un seul étage avec plusieurs blocs-satellites par un arbre d'entrée tournant à une vitesse de rotation modérée sur un arbre de sortie tournant à une vitesse relativement élevée, le couple emmené étant transmis sur un pignon planétaire à denture double hélicoïdale d'un arbre de sortie, en passant par une couronne à denture intérieure droite sur 2 à 6 blocs-satellites avec logement radial fixe dans le porte-satellites, **caractérisé en ce que** d'abord la roue satellite à denture droite engrenante avec la couronne ainsi qu'une des deux moitiés de la roue jumelle à denture double hélicoïdale de chaque bloc-satellite engrenante avec le pignon planétaire sont fixées l'une à l'autre ainsi que sur l'arbre à satellites,et **en ce que** lors de l'insertion des blocs-satellites individuels dans les logements du porte-satellites, la deuxième moitié de la roue jumelle est ajustée par rapport à la première moitié afin d'arriver à une répartition de charges définie entre les blocs-satellites individuels en utilisant des dispositifs permettant un déplacement en sens axial et/ou rotatif et est ensuite fixée en cette position.

2. Procédé pour la transmission d'un couple selon la revendication 1, **caractérisé en ce que** le déplacement en sens axial et/ou rotatif de la deuxième moitié de la roue jumelle est effectué de façon consécutive sur chacun des blocs-satellites individuels.

3. Procédé pour la transmission d'un couple selon la revendication 1 ou 2, **caractérisé en ce que** l'ajustage de la position relative des deux moitiés de la roue jumelle est effectué par une rotation de l'une des moitiés relative à l'autre.

4. Procédé pour la transmission d'un couple selon la revendication 1 ou 2, **caractérisé en ce que** l'ajustage de la position relative des deux moitiés de la roue jumelle est effectué par un déplacement relatif en sens axial.

5. Procédé pour la transmission d'un couple selon les revendications 1 à 4, **caractérisé en ce que** la deuxième moitié de la roue jumelle est fixée à l'arbre satellite et/ou à la première moitié de la roue jumelle après ajustage

6. Procédé pour la transmission d'un couple selon les revendications 1, 2, et 4, **caractérisé en ce que** la deuxième moitié de la roue jumelle est fixée à la première moitié élastiquement en sens axial.

7. Procédé pour la transmission d'un couple selon la revendication 6, **caractérisé par** l'utilisation de ressorts à disques comme élément élastique.

8. Procédé pour la transmission d'un couple selon les revendications 1 et 4 à 7, **caractérisé en ce que** le profil de la roue satellite à denture droite continue à saillie réduite sur l'arbre et y sert comme cannelure extérieure pour prendre une moitié de la roue jumelle dotée d'une cannelure intérieure correspondante, ou bien les deux.

9. Procédé pour la transmission d'un couple selon les revendications 1, 2, 4 et 5, **caractérisé par** l'utilisation de rondelles d'ajustage pour l'ajustage axial de la position relative des deux moitiés de la roue jumelle.

10. Procédé pour la transmission d'un couple selon les revendications 1 à 9, **caractérisé par** un porte-satellites en parties distinctes où les blocs-satellites sont insérés dans leurs logements radialement par rapport à l'axe de l'arbre à satellites.

11. Train planétaire à un seul étage avec 2 à 6 blocs-satellites (1) ayant une position radialement fixe sur un porte-satellites (7) pour la réduction à un minimum des pertes et du bruit dans la transmission d'un couple emmené par un arbre d'entrée (8) sur le pignon planétaire (4) d'un arbre de sortie (9) à une vitesse de rotation relativement élevée et, dans chacun des blocs-satellites, avec une roue satellite à denture droite (3) engrenante avec une couronne (2) à denture droite intérieure montée fixe sur l'arbre d'entree (8) **caractérisé en ce que** la roue satellite à denture droite est montée solidaire avec les deux moitiés (5a, 5b) d'une roue jumelle à denture double hélicoïdale (5) et **en ce que**, dans le but d'une répartition uniforme de charges sur tous les blocs-satellites, chacun des blocs-satellites (1) dans le porte-satellites est muni de dispositifs permettant, lors de l'assemblage des blocs-satellites individuels, l'ajustage par déplacement axial et/ou par rotation autour de l'arbre à satellites et leur fixation en place.
